(19) Europäisches Patentamt / European Patent Office / Office européen des brevets

(11) **EP 3 604 027 B1**

(12) **EUROPEAN PATENT SPECIFICATION**

(45) Date of publication and mention
of the grant of the patent:
**26.05.2021 Bulletin 2021/21**

(51) Int Cl.:
**B60M 1/26** $^{(2006.01)}$    **H02G 7/02** $^{(2006.01)}$

(21) Application number: **18306072.2**

(22) Date of filing: **03.08.2018**

(54) **AN IMPROVED TENSIONING DEVICE WITHOUT COUNTERWEIGHTS, FOR APPLYING A TENSION ON A CABLE OF A RAILWAY LINE**

VERBESSERTE SPANNVORRICHTUNG OHNE GEGENGEWICHTE, ZUM AUFBRINGEN EINER SPANNUNG AUF EIN KABEL EINER BAHNSTRECKE

DISPOSITIF DE TENSIONNEMENT AMÉLIORÉ SANS CONTREPOIDS, POUR APPLIQUER UNE TENSION SUR UN CÂBLE D'UNE LIGNE DE CHEMIN DE FER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2020 Bulletin 2020/06**

(73) Proprietor: **ALSTOM Transport Technologies
93400 Saint-Ouen (FR)**

(72) Inventors:
• **FORMENTI, Leonardo
  23891 BARZANO (LC) (IT)**
• **PEREGO, Andrea
  20900 MONZA (MB) (IT)**
• **RUELLA, Samuele
  23854 OLGINATE (IT)**

(74) Representative: **Lavoix
2, place d'Estienne d'Orves
75441 Paris Cedex 09 (FR)**

(56) References cited:
**EP-A1- 2 106 956      WO-A1-2008/037386
CN-A- 101 618 686      GB-A- 289 805
JP-A- 2011 163 551      PL-B1- 228 613**

**Description**

The present invention concerns a tensioning device for applying a tension on a cable of a railway line.

The railway line comprises contact and messenger cables forming spans. These cables must be maintained in tension in order to guarantee a constant geometry of the spans.

The tensioning device is intended to apply a force on a cable, in order to maintain the shape of the corresponding spans.

It should be noticed that the cable may suffer thermal dilatations. Thus, the tensioning device is also intended to compensate such thermal dilatations.

Tensioning devices are usually known from prior art. Such a known tensioning device usually comprise counterweights, that apply a force on the cable via a ratio reduction system and pulleys.

Such a tensioning device comprising counterweights is difficult to be installed, and may cause damages in case of a fall of the counterweights. This tensioning device needs regular maintenance to avoid as much as possible falls of counterweights.

Known tensioning devices are for example disclosed in GB 289 805, WO 2008/037386, CN101 618 686 or EP 2 106 956.

The invention is intended to solve these problems, by proposing an improved tensioning device without counterweights, having a high reliability.

To this end, the invention relates to a tensioning device for applying a tension on a cable of a railway line, according to claim 1.

The elastic member is intended to apply a force on the cable. This elastic member can move in order to compensate thermal dilatations of the cable.

Since the applied force must be constant, the pulley is intended to ensure a constant force while the elastic member moves. Indeed, the torque of the elastic member varies when the elastic member moves.

It should be noticed that the torque of the elastic member and the applied force are related with the following relation:

$$C = b \times F,$$

Where C is the torque of the elastic member, F is the constant tensioning force, and b is the radius of the contact point on the pulley where the force F is applied, i.e. the radial distance between a rotation axis of the pulley and the contact point on the pulley where the force F is applied.

Thus, to get a constant force F whiled the torque C varies, it is necessary to modify the radial distance between the contact point and the axis of the pulley.

To this end, the device of the invention comprises a rope of variable cross section, arranged in a V-shaped groove.

Because of the V shape, the radial position of the rope in the groove depends on its cross section.

Where the cross section of the rope is low, the rope is deeply inserted in the groove, thus the radius of the contact point between this rope and walls of the groove is low. Besides, where the cross section of the rope is high, the rope cannot be deeply inserted in the groove, thus the radius of the contact point between this rope and walls of the groove is high.

A man skilled in the art, knowing the relation C = b x F, knowing the force F to be applied, and knowing the elastic member, thus knowing the torque C as a function of the position of the elastic member, will easily calculate dimensions for the rope and for the groove.

A tensioning device according to the invention optionally presents at least one of the following features, taken alone or in any possible combination.

- The pulley is connected to the circular elastic member via a ratio reduction system.
- The ratio reduction system transforms three turns of the elastic member around its axis in 270° of turn of the pulley around its axis.
- The flexible rope is a chain or a flexible cable with variable section able to be wrapped inside the pulley.
- The circular elastic member is a spiral spring, more particularly a power spring.
- The tensioning device comprises a support member for supporting the circular elastic member and the pulley, the support member comprising fixation means for a fixation on a pole of the railway line.
- The support member comprises a first part comprising the fixation means and a second part supporting the circular elastic member and the pulley, the first and second parts being connected via a pivot linkage.
- The first end of the rope is connected to a radially exterior area of the pulley.
- The cross section of the rope decreases from the first end towards the second end.
- The elastic member and the pulley are arranged side by side in a direction perpendicular to the pulley axis.

The invention will be better understood by reading the following specification, given only as an example, and referring to enclosed figures, in which:

- Figure 1 is a perspective view of a tensioning device according to an example of embodiment of the invention;
- Figure 2 is a perspective view of a pulley of the tensioning device of figure 1, partially shown by transparence;
- Figures 3, 4 and 5 are side view of the pulley of figure 2, respectively in a first position, in an intermediate position and in a second position;
- Figures 6, 7 and 8 are partial cross section view of pulleys of figures 3, 4 and 5 respectively.

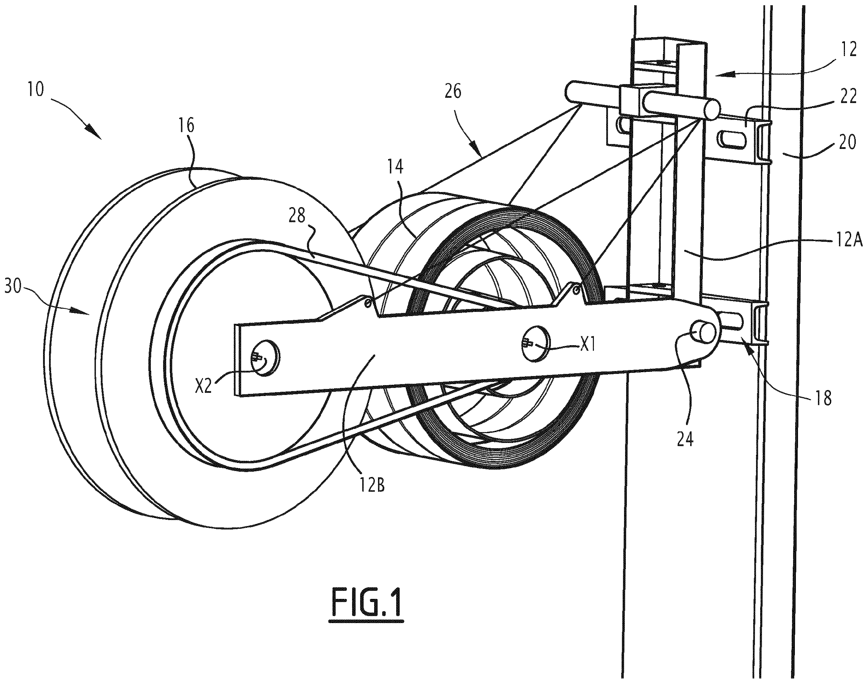

A tensioning device 10 according to an example of embodiment is shown on figure 1. The tensioning device 10 is intended to apply a tension on a cable of an electrical power line and preferentially of a railway line.

The tensioning device 10 comprises a support member 12 for supporting a circular elastic member 14 and a pulley 16. The support member 12 comprises fixation means 18 for a fixation on a pole 20 of the railway line. Alternatively, the support member 12 can be fixed on a wall of a tunnel.

For instance, the fixation means 18 comprises at least one pad 22 having openings for the passage of fixation screws through these openings.

The support member 12 has a first part 12A comprising the fixation means 18, and a second part 12B supporting the circular elastic member 14 and the pulley 16.

The first 12A and second 12B parts are connected via a pivot linkage 24, so that the angular position between these first 12A and second 12B parts may be adapted to the position of the cable with respect to the first part 12A.

Advantageously, fixation elements 26, such as strings, extend between the first part 12A and the second part 12B, so as to fix a desired angular position between the first 12A and second 12B.

The circular elastic member 14 is any elastic member able to apply a torque in function of its angular position. For example, the circular elastic member is a spiral spring, more particularly a power spring. The elastic member 14 is intended to carry on the function of the counterweights of prior art.

The circular elastic member 14 is supported by the support member 12 on a first axis X1.

The pulley 16 is rotatably connected to the circular elastic member 14. The pulley 16 is rotatable around a second axis X2, mounted on the support member 12. Thus, the pulley 16 is intended to absorb the cable's elongation due to thermal dilatation.

In the shown example, the elastic member 14 and the pulley 16 are arranged side by side in a direction perpendicular to the pulley axis X2. In a variant, the pulley 16 may be arranged around the elastic member 14, and/or the first axis X1 may be coaxial with the second axis X2.

Advantageously, the pulley 16 is connected to the circular elastic member 14 via a ratio reduction system 28. The ratio reduction system 28 is of any known type.

The ratio reduction system 28 is preferentially configured transform three turns of the elastic member 14 around the first axis X1, in 270° of turn of the pulley 16 around the second axis X2.

Using a ratio reduction system allows reducing the dimension of the elastic member 14, and obtaining a higher torque on the pulley.

The elastic member 14 can be loaded till a desired value, so as to apply a preload that can be accordingly adapted.

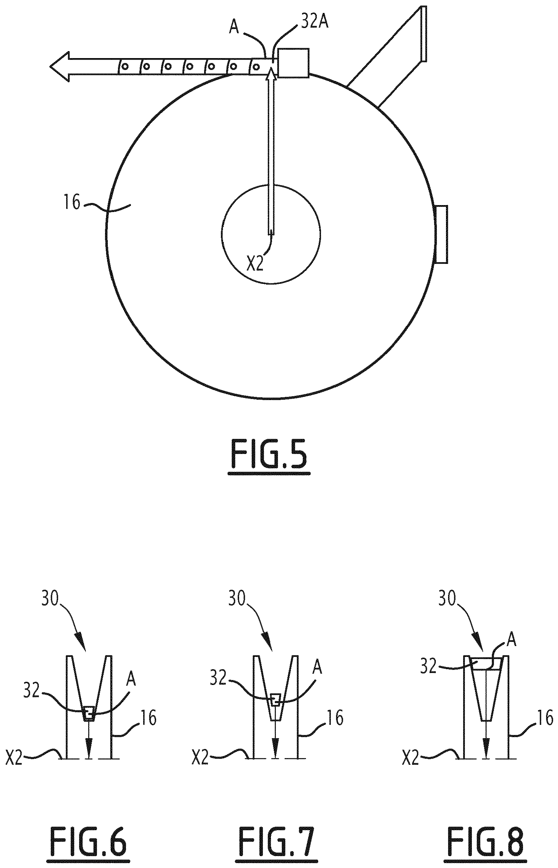

The pulley 16 comprises a circumferential groove 30, more particularly shown on figures 6 to 8. The circumferential groove 30 has a V-shaped cross-section defined by two lateral converging walls.

It should be noticed that the pulley 16 has a constant radius.

Besides, the pulley 16 comprises a flexible rope 32 having a variable cross section, expending between a first end 32A connected to the pulley and a second end 32B intended to be connected to the cable. For instance, the first end 32A is screwed in the groove 30, and/or the second end 32B comprises a fixation ring 34.

The pulley is intended to apply a force F on the cable when the second end 32B is fixed to the cable.

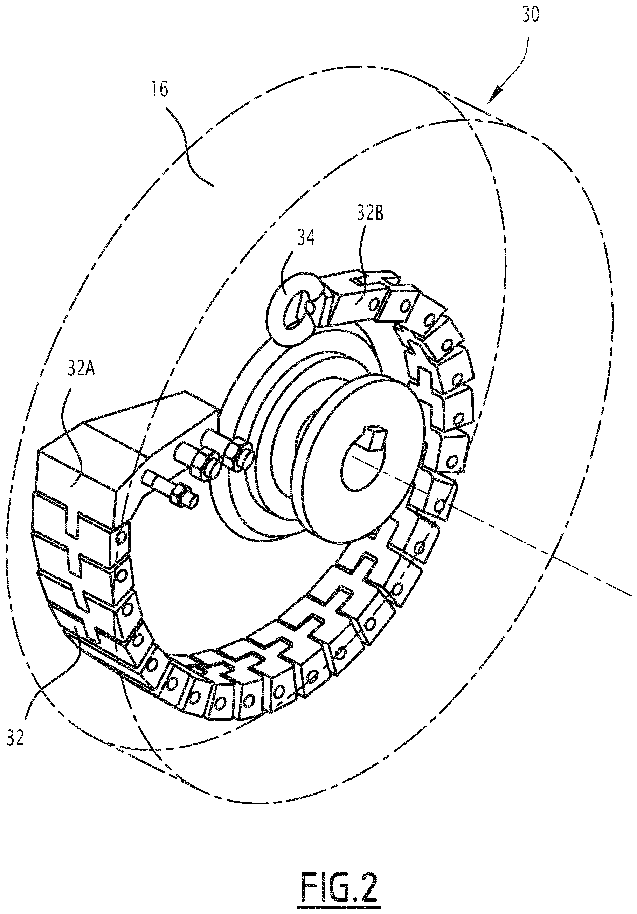

As shown on figures 2 to 5, the first end 32A is connected to a radially exterior area of the pulley 16.

The flexible rope 32 has a width, in a direction parallel to the second axis X2, which varies from the first end 32A towards the second end 32B. More particularly, this width decreases from the first end 32A towards the second end 32B, as it could be seen on figure 2.

The flexible rope 32 is sufficiently flexible to wrap around the second axis X2.

The flexible rope 32 is for example a chain.

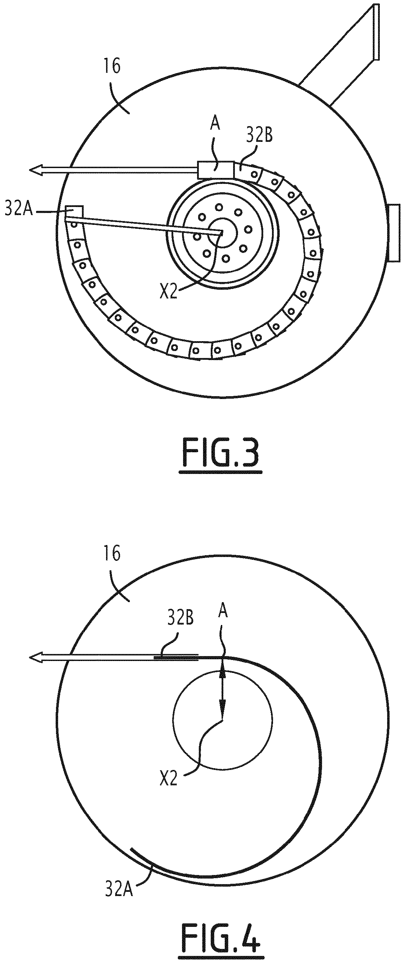

The pulley 16 is rotatably movable around the second axis X2, between a first position, shown in figures 3 and 6, in which the flexible rope 32 is totally arranged in the circumferential groove 30 around the second axis X2, and a second position, shown in figures 5 and 8, in which the flexible rope 32 is totally unwound.

The depth of the flexible rope 32 in the groove 30 is dependent from the width of this flexible rope 32. Indeed, in any point, the flexible rope 32 cannot go deeper than allowed by its width cooperating with the converging walls of the groove 30.

Indeed, since the width of the flexible rope 32 varies its length, thus the depth of the flexible rope 32 in the groove 30 varies along this groove 30.

It should be noticed that the application point A of the force F applied on the cable is at an intersection between the direction of the cable and a plane perpendicular to the cable and comprising the second axis X2.

The distance between the application point A and the second axis X2 is the radius b in the relation C = b x F previously defined.

In the first position, shown on figures 3 and 6, the application point A is at the second end 32B. This second end 32B has the lowest width, so that the rope 32 is deeply arranged in the groove 30. Thus, in this first position, the radius b is minimal.

In the second position, shown on figures 5 and 8, the application point A is at the first end 32A. This first end 32A has the highest width, so that the rope 32 is arranged in the exterior area of the groove 30. Thus, in this second position, the radius b is maximal.

Thus, the radial position of the application point A varies while the pulley 16 rotates around the second axis X2.

Figures 4 and 7 show an intermediate position between the first and the second position. In the intermediate position, the width of the rope 32 at the application point A is higher than its minimum and is lower than its maximum. Thus, the application point A is at an intermediate radial position.

It clearly appears that the radius b varies while the pulley 16 rotates around the second axis X2. The pulley 16 rotates when the elastic member 14 rotates. Thus, the radius b varies when the torque C varies, so that the force F can be kept constant.

A man skilled would easily choose the dimensions of the rope 32 and of the groove 30, as a function of the elastic member 14 characteristics, and of the desired force F.

The tensioning device 10 according the invention allows compensating the thermal dilatation of a cable in a railway line. This tensioning device does not contain counterweights, thus it allows avoiding maintenance, and it is easier to be installed, on the pole 20 or on a wall of a tunnel. Besides, this tensioning device 10 has a low bulk.

It should be noted that the invention is not limited to the example of embodiment disclosed above, and may contain additional variant.

counterweights, thus it allows avoiding maintenance, and it is easier to be installed, on the pole 20 or on a wall of a tunnel. Besides, this tensioning device 10 has a low bulk.

It should be noted that the invention is not limited to the example of embodiment disclosed above, and may contain additional variants within the scope of appendent claims.

**Claims**

1. A tensioning device (10) for applying a tension on a cable, preferentially of a railway line, comprising:

   - at least one circular elastic member (14),
   - a pulley (16) rotatably connected to the circular elastic member (14) so that a torque generated by the circular elastic member (14) acts on the pulley (16) , **characterized in that**:
   - the pulley (16) has a constant radius,
   - the pulley (16) comprises a circumferential groove (30), the circumferential groove (30) having a V-shaped cross-section defined by two lateral converging walls,
   - the pulley (16) comprises a flexible rope (32), expending between a first end (32A) connected to the pulley (16) and a second end (32B) intended to be connected to the cable, the flexible rope (32) having a cross section that decrease from the first end (32A) towards the second end (32B),

   - the pulley (16) is rotatably movable around an axis (X2), between a first position in which the flexible rope (32) is arranged in the circumferential groove (30) around the axis (X2), and a second position in which the flexible rope (32) is unwound
   - the V-shaped circumferential groove (30) and the cross section of the rope (32) are dimensioned in such a way that the two together define the radial position of the rope in the groove (30).

2. The tensioning device (10) according to claim 1, wherein the pulley (16) is connected to the circular elastic member (14) via a ratio reduction system (28).

3. The tensioning device (10) according to claim 2, wherein the ratio reduction system (28) transforms three turns of the elastic member around its axis (X1) in 270° of turn of the pulley (16) around its axis (X2).

4. The tensioning device (10) according to any of claims 1 to 3, wherein the flexible rope (30) is a chain or a flexible cable with variable section able to be wrapped inside the pulley.

5. The tensioning device (10) according to any of claims 1 to 4, wherein the circular elastic member (32) is a spiral spring, more particularly a power spring.

6. The tensioning device (10) according to any of claims 1 to 5, comprising a support member (12) for supporting the circular elastic member (14) and the pulley (16), the support member (12) comprising fixation means (18) for a fixation on a pole (20) of the railway line.

7. The tensioning device (10) according to claim 6, wherein the support member (12) comprises a first part (12A) comprising the fixation means (18) and a second part (12B) supporting the circular elastic member (14) and the pulley (16), the first (12A) and second (12B) parts being connected via a pivot linkage (24).

8. The tensioning device (10) according to any of claims 1 to 7, wherein the first end (32A) of the rope (32) is connected to a radially exterior area of the pulley (16).

9. The tensioning device (10) according to any of claims 1 to 8, wherein the cross section of the rope (32) decreases from the first end (32A) towards the second end (32B).

10. The tensioning device (10) according to any of claims 1 to 9, wherein the elastic member (14) and the pulley (16) are arranged side by side in a direction perpendicular to the pulley axis (X2).

**Patentansprüche**

1. Spannvorrichtung (10) zum Aufbringen einer Spannung auf ein Kabel, vorzugsweise einer Eisenbahnleitung, umfassend:

   - mindestens ein kreisförmiges elastisches Element (14),
   - eine Umlenkrolle (16), die drehbar mit dem kreisförmigen elastischen Element (14) verbunden ist, so dass ein von dem kreisförmigen elastischen Element (14) erzeugtes Drehmoment auf die Umlenkrolle (16) wirkt, **dadurch gekennzeichnet, dass**
   - die Umlenkrolle (16) einen konstanten Radius aufweist,
   - die Umlenkrolle (16) eine Umfangsnut (30) aufweist, wobei die Umfangsnut (30) einen V-förmigen Querschnitt hat, der durch zwei seitliche konvergierende Wände definiert ist,
   - die Umlenkrolle (16) ein flexibles Seil (32) umfasst, das sich zwischen einem ersten Ende (32A), das mit der Umlenkrolle (16) verbunden ist, und einem zweiten Ende (32B), das dazu bestimmt ist, mit dem Kabel verbunden zu werden, erstreckt, wobei das flexible Seil (32) einen Querschnitt aufweist, der von dem ersten Ende (32A) zu dem zweiten Ende (32B) hin abnimmt,
   - die Umlenkrolle (16) um eine Achse (X2) zwischen einer ersten Position, in der das flexible Seil (32) in der Umfangsnut (30) um die Achse (X2) angeordnet ist, und einer zweiten Position, in der das flexible Seil (32) abgewickelt ist, drehbar beweglich ist,
   - die V-förmige Umfangsnut (30) und der Querschnitt des Seils (32) so bemessen sind, dass beide zusammen die radiale Lage des Seils in der Nut (30) definieren.

2. Spannvorrichtung (10) nach Anspruch 1, wobei die Umlenkrolle (16) über ein Untersetzungssystem (28) mit dem kreisförmigen elastischen Element (14) verbunden ist.

3. Spannvorrichtung (10) nach Anspruch 2, wobei das Untersetzungssystem (28) drei Umdrehungen des elastischen Glieds um seine Achse (X1) in eine 270° Umdrehung der Umlenkrolle (16) um ihre Achse (X2) umsetzt.

4. Spannvorrichtung (10) nach einem der Ansprüche 1 bis 3, wobei das flexible Seil (30) eine Kette oder ein flexibles Kabel mit variablem Querschnitt ist, das in die Umlenkrolle gewickelt werden kann.

5. Spannvorrichtung (10) nach einem der Ansprüche 1 bis 4, wobei das kreisförmige elastische Element (32) eine Spiralfeder, insbesondere eine Kraftfeder, ist.

6. Spannvorrichtung (10) nach einem der Ansprüche 1 bis 5, umfassend ein Stützelement (12) zum Stützen des kreisförmigen elastischen Elements (14) und der Umlenkrolle (16), wobei das Stützelement (12) Befestigungsmittel (18) für eine Befestigung an einem Mast (20) der Eisenbahnleitung aufweist.

7. Spannvorrichtung (10) nach Anspruch 6, wobei das Stützelement (12) ein erstes Teil (12A), das die Befestigungsmittel (18) umfasst, und ein zweites Teil (12B), das das kreisförmige elastische Element (14) und die Umlenkrolle (16) trägt, umfasst, wobei das erste (12A) und das zweite (12B) Teil über eine Schwenkverbindung (24) verbunden sind.

8. Spannvorrichtung (10) nach einem der Ansprüche 1 bis 7, wobei das erste Ende (32A) des Seils (32) mit einem radial äußeren Bereich der Umlenkrolle (16) verbunden ist.

9. Spannvorrichtung (10) nach einem der Ansprüche 1 bis 8, wobei der Querschnitt des Seils (32) vom ersten Ende (32A) zum zweiten Ende (32B) hin abnimmt.

10. Spannvorrichtung (10) nach einem der Ansprüche 1 bis 9, wobei das elastische Element (14) und die Umlenkrolle (16) in einer Richtung senkrecht zur Umlenkrollenachse (X2) nebeneinander angeordnet sind.

**Revendications**

1. Dispositif de tension (10) pour appliquer une tension sur un câble, de préférence d'une ligne de chemin de fer, comprenant :

   - au moins un élément élastique circulaire (14),
   - une poulie (16) raccordée en rotation à l'élément élastique circulaire (14) de sorte qu'un couple généré par l'élément élastique circulaire (14) agit sur la poulie (16), **caractérisé en ce que** :
   - la poulie (16) présente un rayon constant,
   - la poulie (16) comprend une rainure circonférentielle (30), la rainure circonférentielle (30) ayant une section transversale en forme de V définie par deux parois convergentes latérales,
   - la poulie (16) comprend un câble flexible (32) s'étendant entre une première extrémité (32A) raccordée à la poulie (16) et une seconde extrémité (32B) destinée à être raccordée au câble, le câble flexible (32) présentant une section transversale qui diminue depuis première extrémité (32A) vers la seconde extrémité (32B),

- la poulie (16) est mobile en rotation autour d'un axe (X2), entre une première position dans laquelle le câble flexible (32) est agencé dans la rainure circonférentielle (30) autour de l'axe (X2), et une seconde position dans laquelle le câble flexible (32) est déroulé,

- la rainure circonférentielle (30) en forme de V et la section transversale du câble (32) sont dimensionnées de sorte que les deux définissent ensemble la position radiale du câble dans la rainure (30).

2. Dispositif de tension (10) selon la revendication 1, dans lequel la poulie (16) est raccordée à l'élément élastique circulaire (14) via un système de réduction de rapport (28).

3. Dispositif de tension (10) selon la revendication 2, dans lequel le système de réduction de rapport (28) transforme trois tours de l'élément élastique autour de son axe (X1) en 270° de tour de la poulie (16) autour de son axe (X2).

4. Dispositif de tension (10) selon l'une quelconque des revendications 1 à 3, dans lequel le câble flexible (30) est une chaîne ou un câble flexible avec une section variable pouvant être enroulée à l'intérieur de la poulie.

5. Dispositif de tension (10) selon l'une quelconque des revendications 1 à 4, dans lequel l'élément élastique circulaire (32) est un ressort en spirale, plus particulièrement un ressort mécanique.

6. Dispositif de tension (10) selon l'une quelconque des revendications 1 à 5, comprenant un élément de support (12) pour supporter l'élément élastique circulaire (14) et la poulie (16), l'élément de support (12) comprenant un moyen de fixation (18) pour la fixation d'un pieu (20) de la ligne de chemin de fer.

7. Dispositif de tension (10) selon la revendication 6, dans lequel l'élément de support (12) comprend une première partie (12A) comprenant le moyen de fixation (18) et une seconde partie (12B) supportant l'élément élastique circulaire (14) et la poulie (16), les première (12A) et seconde (12B) parties étant raccordées via une liaison de pivot (24).

8. Dispositif de tension (10) selon l'une quelconque des revendications 1 à 7, dans lequel la première extrémité (32A) du câble (32) est raccordée à une surface radialement extérieure de la poulie (16).

9. Dispositif de tension (10) selon l'une quelconque des revendications 1 à 8, dans lequel la section transversale du câble (32) diminue de la première extrémité (32A) vers la seconde extrémité (32B).

10. Dispositif de tension (10) selon l'une quelconque des revendications 1 à 9, dans lequel l'élément élastique (14) et la poulie (16) sont agencés côte à côte dans une direction perpendiculaire à l'axe de poulie (X2).

FIG.1

## FIG.2

## FIG.3

## FIG.4

FIG.5

FIG.6

FIG.7

FIG.8

**EP 3 604 027 B1**

**REFERENCES CITED IN THE DESCRIPTION**

**Patent documents cited in the description**

- GB 289805 A
- WO 2008037386 A
- CN 101618686
- EP 2106956 A